# EUROPEAN PATENT APPLICATION

(11) **EP 3 522 531 A1**
(43) Date of publication of application: **07.08.2019**
(21) Application number: 17856767.3
(22) Date of filing: 28.09.2017
(51) Int. Cl.: H04N 19/11, H04N 19/593, H04N 19/176, H04N 19/122, H04N 19/70

(54) **METHOD FOR PROCESSING PICTURE BASED ON INTRA-PREDICTION MODE AND APPARATUS FOR SAME**

(30) Priority: 30.09.2016 US 201662401914 P
(71) Applicant: LG Electronics Inc., Seoul 07336 (KR)
(72) Inventor: JANG, Hyeongmoon, Seoul 06772 (KR)
(74) Representative: Maikowski & Ninnemann Patentanwälte Partnerschaft mbB
(86) International application number: PCT/KR2017/010782
(87) International publication number: WO 2018/062881

(57) **Abstract**

Disclosed is a method and apparatus for processing an image based on an intra prediction mode in the present invention. Particularly, the method may include decoding a Most Probable Mode (MPM) flag indicating whether a current block is encoded by using Most Probable Mode (MPM); generating a first mode group list by using remaining prediction modes except an MPM candidate, when the current block is not encoded by using the MPM; decoding a mode group flag indicating whether the prediction mode of the current block is included in the first mode group list; and determining the prediction mode of the current block by using an index indicating a specific prediction mode in the first mode group list, when the prediction mode of the current block is included in the first mode group list.

## Description

### [Technical Field]

The present invention relates to a method for processing a still image or moving image and, more particularly, to a method for encoding/decoding a still image or moving image based on an intra-prediction mode and an apparatus supporting the same.

### [Background Art]

Compression encoding means a series of signal processing techniques for transmitting digitized information through a communication line or techniques for storing information in a form suitable for a storage medium. The medium including a picture, an image, audio, etc. may be a target for compression encoding, and particularly, a technique for performing compression encoding on a picture is referred to as video image compression.

Next-generation video contents are supposed to have the characteristics of high spatial resolution, a high frame rate and high dimensionality of scene representation. In order to process such contents, a drastic increase in the memory storage, memory access rate and processing power will result.

Accordingly, it is required to design a coding tool for processing next-generation video contents efficiently.

### [Disclosure]

### [Technical Problem]

Recently, it has been discussed a method of performing a prediction within an image by using more prediction modes within an image in comparison with the existing prediction method within an image (or intra-prediction method). The increase of prediction directions within an image enables more accurate prediction and decreases distortion, but there is a problem that bits for signaling the increased prediction modes is increased.

Accordingly, an object of the present invention is to propose a method for grouping prediction modes efficiently except a Most Probable Mode (MPM) in order to represent increased prediction modes within an image with smaller bits.

In addition, an object of the present invention is to propose a method for grouping prediction modes except a Most Probable Mode (MPM) by considering a selection probability of a prediction mode.

Technical objects to be achieved in the present invention are not limited to the above-described technical objects, and other technical objects not described above may be evidently understood by a person having ordinary skill in the art to which the present invention pertains from the following description.

### [Technical Solution]

According to an aspect of the present invention, a method for processing an image based on an intra prediction mode may include decoding a Most Probable Mode (MPM) flag indicating whether a current block is encoded by using Most Probable Mode (MPM); generating a first mode group list by using remaining prediction modes except an MPM candidate, when the current block is not encoded by using the MPM; decoding a mode group flag indicating whether the prediction mode of the current block is included in the first mode group list; and determining the prediction mode of the current block by using an index indicating a specific prediction mode in the first mode group list, when the prediction mode of the current block is included in the first mode group list.

Preferably, the step of generating the first mode group list may include adding a prediction mode of a block neighboring the current block among the remaining prediction modes except the MPM candidate to the first mode group list.

Preferably, the block neighboring the current block may include at least one of a block neighboring left, above, above-left, bottom-left or above-right side of the current block.

Preferably, the step of generating the first mode group list may include adding a first prediction mode among the remaining prediction modes except the MPM candidate to the first mode group list, and the first prediction mode includes at least one of a planar mode, a DC mode, a vertical mode, a horizontal mode or a diagonal mode.

Preferably, the step of generating the first mode group list may include adding a prediction mode corresponding to a value adding or subtracting 1 to/from a mode value of an angular prediction mode among the prediction modes included in the first mode group list to the first mode group list.

Preferably, the step of generating the first mode group list may include adding a prediction mode corresponding to a value by adding or subtracting 1 to/from a mode value of an angular prediction mode among the prediction modes included in the first mode group list to the first mode group list repeatedly until a total number of the first mode group list is filled up.

Preferably, the total number of the first mode group list may be a predetermined number or transmitted in a unit of a sequence, a picture, a slice or an encoding block from an encoder.

Preferably, the step of generating the first mode group list may include adding a prediction mode symmetrical to a prediction mode of a block neighboring the current block based on a prediction direction of a diagonal mode.

Preferably, when the prediction mode of the current block is not included in the first mode group list, the method may further include generating a second mode group list; and determining a prediction mode of the current block by using an index indicating a specific prediction mode in the second mode group list.

Preferably, the second mode group list may include prediction modes except the prediction modes of the first mode group list among the remaining prediction modes except the MPM candidate.

Preferably, the step of generating the first mode group list may include allocating higher priority to a prediction mode closer to a prediction direction of a vertical mode or a horizontal mode among the prediction modes except the prediction modes of the first mode group list; and arranging the second mode group list based on the allocated priority.

According to another aspect of the present invention, an apparatus for processing an image based on an intra-prediction mode may include an MPM flag decoding unit for decoding a Most Probable Mode (MPM) flag indicating whether a current block is encoded by using Most Probable Mode (MPM); a first mode group list generation unit for generating a first mode group list by using remaining prediction modes except an MPM candidate, when the current block is not encoded by using the MPM; a mode group flag decoding unit for decoding a mode group flag indicating whether the prediction mode of the current block is included in the first mode group list; and a prediction mode determination unit for determining a prediction mode of the current block by using an index indicating a specific prediction mode in the first mode group list, when the prediction mode of the current block is included in the first mode group list.

### [Technical Effects]

According to the present invention, prediction modes except a Most Probable Mode (MPM) are efficiently grouped, and accordingly, bits for representing a prediction mode within an image may be saved, and compression efficiency may be improved.

In addition, according to the present invention, by considering a selection probability of a prediction mode, prediction modes except a Most Probable Mode (MPM) may be efficiently grouped, and through this, bits for representing a prediction mode within an image may be reduced.

Effects which may be obtained in the present invention are not limited to the above-described effects, and other technical effects not described above may be evidently understood by a person having ordinary skill in the art to which the present invention pertains from the following description.

### [Description of Drawings]

The accompanying drawings, which are included herein as a part of the description for help understanding the present invention, provide embodiments of the present invention, and describe the technical features of the present invention with the description below.
FIG. 1 illustrates a schematic block diagram of an encoder in which the encoding of a still image or video signal is performed, as an embodiment to which the present invention is applied.
FIG. 2 illustrates a schematic block diagram of a decoder in which decoding of a still image or video signal is performed, as an embodiment to which the present invention is applied.
FIG. 3 is a diagram for describing a split structure of a coding unit that may be applied to the present invention.
FIG. 4 is a diagram for describing a prediction unit that may be applied to the present invention.
FIG. 5 is an embodiment to which the present invention is applied and is a diagram illustrating an intra-prediction method.
FIG. 6 illustrates a prediction direction according to an intra-prediction mode.
FIG. 7 is a flowchart for describing a method for decoding a prediction mode within an image as an embodiment to which the present invention is applied.
FIG. 8 is a diagram illustrating a method for configuring a prediction mode group as an embodiment to which the present invention is applied.
FIG. 9 is a diagram illustrating a method for binarization of a prediction mode group as an embodiment to which the present invention is applied.
FIG. 10 is a flowchart illustrating a method for configuring a prediction mode group as an embodiment to which the present invention is applied.
FIG. 11 is a diagram illustrating a method of inserting a prediction mode in a prediction mode group list as an embodiment to which the present invention is applied.
FIG. 12 is a diagram for describing a method of referring a prediction mode of a neighboring block as an embodiment to which the present invention is applied.
FIG. 13 is a diagram illustrating a method of inserting a prediction mode in a prediction mode group list as an embodiment to which the present invention is applied.
FIG. 14 is a diagram illustrating a method of inserting a prediction mode in a prediction mode group list as an embodiment to which the present invention is applied.
FIG. 15 is a diagram illustrating a method of inserting a prediction mode in a prediction mode group list as an embodiment to which the present invention is applied.
FIG. 16 is a flowchart illustrating a method of configuring a prediction mode group as an embodiment to which the present invention is applied.
FIG. 17 is a diagram illustrating a method of inserting a prediction mode in a prediction mode group list as an embodiment to which the present invention is applied.
FIG. 18 is a diagram illustrating a method of inserting a prediction mode in a prediction mode group list as an embodiment to which the present invention is applied.
FIG. 19 is a diagram illustrating a method of determining a prediction mode added to a prediction mode group based on a prediction mode of a neighboring block as an embodiment to which the present invention is applied.
FIG. 20 is a flowchart illustrating a method of arranging a prediction mode of a prediction mode group list as an embodiment to which the present invention is applied.
FIG. 21 is a diagram for describing an intra prediction mode according to an embodiment of the present invention.
FIG. 22 is a diagram illustrating an intra prediction mode in more detail according to an embodiment of the present invention.

### [Mode for Invention]

Hereinafter, a preferred embodiment of the present invention will be described by reference to the accompanying drawings. The description that will be described below with the accompanying drawings is to describe exemplary embodiments of the present invention, and is not intended to describe the only embodiment in which the present invention may be implemented. The description below includes particular details in order to provide perfect understanding of the present invention. However, it is understood that the present invention may be embodied without the particular details to those skilled in the art.

In some cases, in order to prevent the technical concept of the present invention from being unclear, structures or devices which are publicly known may be omitted, or may be depicted as a block diagram centering on the core functions of the structures or the devices.

Further, although general terms widely used currently are selected as the terms in the present invention as much as possible, a term that is arbitrarily selected by the applicant is used in a specific case. Since the meaning of the term will be clearly described in the corresponding part of the description in such a case, it is understood that the present invention will not be simply interpreted by the terms only used in the description of the present invention, but the meaning of the terms should be figured out.

Specific terminologies used in the description below may be provided to help the understanding of the present invention. Furthermore, the specific terminology may be modified into other forms within the scope of the technical concept of the present invention. For example, a signal, data, a sample, a picture, a frame, a block, etc may be properly replaced and interpreted in each coding process.

Hereinafter, in the present disclosure, "block" or "unit" refers to a unit of performing an encoding/decoding process such as prediction, transformation and/or quantization and may include multi-dimensional arrangement of samples (or pixels).

"Block" or "unit" may refer to multi-dimensional arrangement of samples with respect to a luma component or multi-dimensional arrangement of samples with respect to a chroma component. In addition, "block" or "unit" may commonly refer to multi-dimensional arrangement of samples with respect to a luma component and multi-dimensional arrangement of samples with respect to a chroma component.

For example, "block" or "unit" may be interpreted as the meaning including a coding block (CB) which refers to arrangement of samples to be encoded/decoded, a coding tree block (CTB) composed of a plurality of coding blocks, a prediction block (PB) (or prediction unit (PU)) which refers to arrangement of samples to which the same prediction is applied, and a transform block (TB) (or transform unit (TU)) which refers to arrangement of samples to which the same transform is applied.

Furthermore, "block" or "unit" may be interpreted as the meaning including a syntax structure used in a process of encoding/decoding arrangement of samples with respect to a luma component and/or a chroma component unless otherwise mentioned in the present disclosure. Here, the syntax structure refers to 0 or more syntax elements present in a bitstream in a specific order, and a syntax element refers to a data element represented in a bitstream.

For example, "block" or "unit" may be interpreted as the meaning including a coding unit (CU) including a coding block (CB) and a syntax structure used for encoding of the coding block (CB), a coding tree unit (CU) including a plurality of coding units, a prediction unit (PU) including a prediction block (PB) and a syntax structure used for prediction of the prediction block (PB), and a transform unit (TU) including a transform block (TB) and a syntax structure used for transformation of the transform block (TB).

In addition, in the present disclosure, "block" or "unit" is not limited to arrangement of samples (or pixels) in a square or rectangular form and may refer to arrangement of samples (or pixels) in a polygonal form having three or more vertexes. In this case, it may be referred to as a polygon block or a polygon unit.

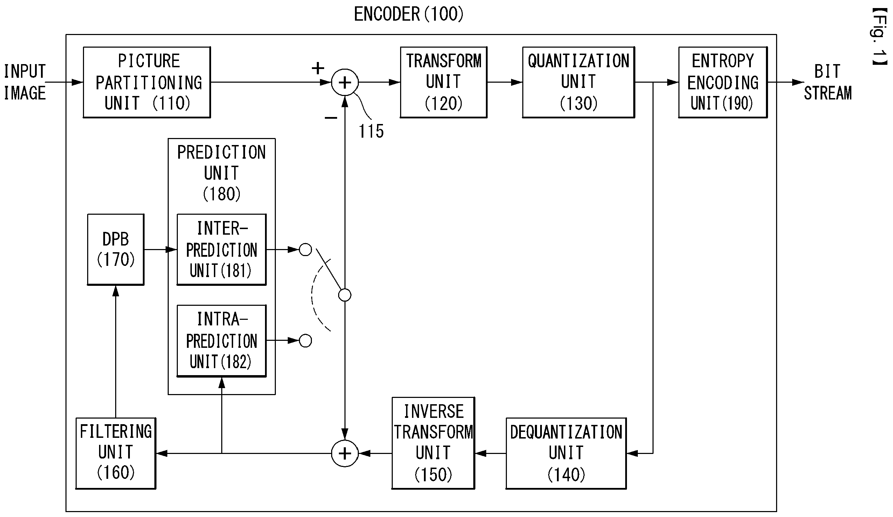

FIG. 1 is illustrates a schematic block diagram of an encoder in which the encoding of a still image or video signal is performed, as an embodiment to which the present invention is applied.

Referring to FIG. 1, the encoder 100 may include a video split unit 110, a subtractor 115, a transform unit 120, a quantization unit 130, a dequantization unit 140, an inverse transform unit 150, a filtering unit 160, a decoded picture buffer (DPB) 170, a prediction unit 180 and an entropy encoding unit 190. Furthermore, the prediction unit 180 may include an inter-prediction unit 181 and an intra-prediction unit 182.

The video split unit 110 splits an input video signal (or picture or frame), input to the encoder 100, into one or more processing units.

The subtractor 115 generates a residual signal (or residual block) by subtracting a prediction signal (or prediction block), output by the prediction unit 180 (i.e., by the inter-prediction unit 181 or the intra-prediction unit 182), from the input video signal. The generated residual signal (or residual block) is transmitted to the transform unit 120.

The transform unit 120 generates transform coefficients by applying a transform scheme (e.g., discrete cosine transform (DCT), discrete sine transform (DST), graph-based transform (GBT) or Karhunen-Loeve transform (KLT)) to the residual signal (or residual block). In this case, the transform unit 120 may generate transform coefficients by performing transform using a prediction mode applied to the residual block and a transform scheme determined based on the size of the residual block.

The quantization unit 130 quantizes the transform coefficient and transmits it to the entropy encoding unit 190, and the entropy encoding unit 190 performs an entropy coding operation of the quantized signal and outputs it as a bit stream.

Meanwhile, the quantized signal outputted by the quantization unit 130 may be used to generate a prediction signal. For example, a residual signal may be reconstructed by applying dequatization and inverse transformation to the quantized signal through the dequantization unit 140 and the inverse transform unit 150. A reconstructed signal may be generated by adding the reconstructed residual signal to the prediction signal output by the inter-prediction unit 181 or the intra-prediction unit 182.

Meanwhile, during such a compression process, neighbor blocks are quantized by different quantization parameters. Accordingly, an artifact in which a block boundary is shown may occur. Such a phenomenon is referred to a blocking artifact, which is one of important factors for evaluating image quality. In order to decrease such an artifact, a filtering process may be performed. Through such a filtering process, the blocking artifact is removed and the error of a current picture is decreased at the same time, thereby improving image quality.

The filtering unit 160 applies filtering to the reconstructed signal, and outputs it through a playback device or transmits it to the decoded picture buffer 170. The filtered signal transmitted to the decoded picture buffer 170 may be used as a reference picture in the inter-prediction unit 181. As described above, an encoding rate as well as image quality can be improved using the filtered picture as a reference picture in an inter-picture prediction mode.

The decoded picture buffer 170 may store the filtered picture in order to use it as a reference picture in the inter-prediction unit 181.

The inter-prediction unit 181 performs temporal prediction and/or spatial prediction with reference to the reconstructed picture in order to remove temporal redundancy and/or spatial redundancy. In this case, a blocking artifact or ringing artifact may occur because a reference picture used to perform prediction is a transformed signal that experiences quantization or dequantization in a block unit when it is encoded/decoded previously.

Accordingly, in order to solve performance degradation attributable to the discontinuity of such a signal or quantization, signals between pixels may be interpolated in a sub-pixel unit by applying a low pass filter to the inter-prediction unit 181. In this case, the sub-pixel means a virtual pixel generated by applying an interpolation filter, and an integer pixel means an actual pixel that is present in a reconstructed picture. A linear interpolation, a bi-linear interpolation, a wiener filter, and the like may be applied as an interpolation method.

The interpolation filter may be applied to the reconstructed picture, and may improve the accuracy of prediction. For example, the inter-prediction unit 181 may perform prediction by generating an interpolation pixel by applying the interpolation filter to the integer pixel and by using the interpolated block including interpolated pixels as a prediction block.

The intra-prediction unit 182 predicts a current block with reference to samples neighboring the block that is now to be encoded. The intra-prediction unit 182 may perform the following procedure in order to perform intra-prediction. First, the intra-prediction unit 182 may prepare a reference sample necessary to generate a prediction signal. Furthermore, the intra-prediction unit 182 may generate a prediction signal using the prepared reference sample. Furthermore, the intra-prediction unit 182 may encode a prediction mode. In this case, the reference sample may be prepared through reference sample padding and/or reference sample filtering. A quantization error may be present because the reference sample experiences the prediction and the reconstruction process. Accordingly, in order to reduce such an error, a reference sample filtering process may be performed on each prediction mode used for the intra-prediction.

The prediction signal (or prediction block) generated through the inter-prediction unit 181 or the intra-prediction unit 182 may be used to generate a reconstructed signal (or reconstructed block) or may be used to generate a residual signal (or residual block).

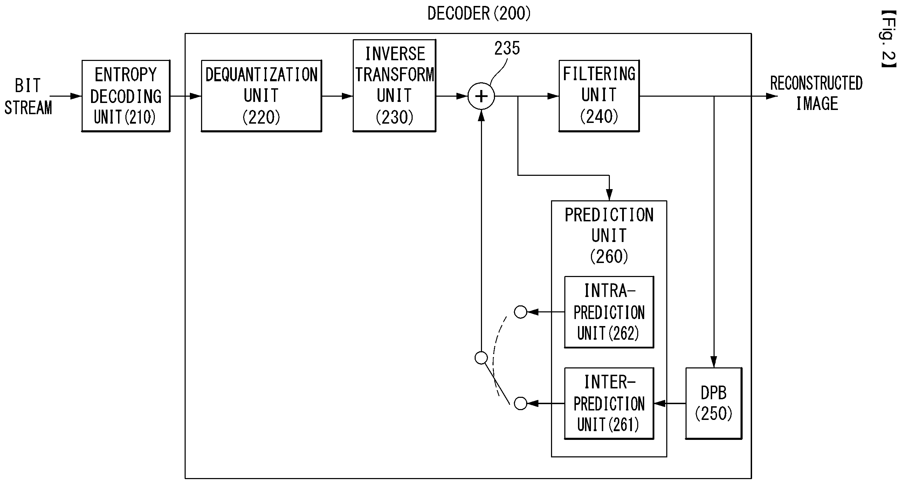

FIG. 2 illustrates a schematic block diagram of a decoder in which decoding of a still image or video signal is performed, as an embodiment to which the present invention is applied.

Referring to FIG. 2, the decoder 200 may include an entropy decoding unit 210, a dequantization unit 220, an inverse transform unit 230, an adder 235, a filtering unit 240, a decoded picture buffer (DPB) 250 and a prediction unit 260. Furthermore, the prediction unit 260 may include an inter-prediction unit 261 and an intra-prediction unit 262.

Furthermore, a reconstructed video signal output through the decoder 200 may be played back through a playback device.

The decoder 200 receives a signal (i.e., bit stream) output by the encoder 100 shown in FIG. 1. The entropy decoding unit 210 performs an entropy decoding operation on the received signal.

The dequantization unit 220 obtains transform coefficients from the entropy-decoded signal using quantization step size information.

The inverse transform unit 230 obtains a residual signal (or residual block) by inverse transforming the transform coefficients by applying an inverse transform scheme.

The adder 235 adds the obtained residual signal (or residual block) to the prediction signal (or prediction block) output by the prediction unit 260 (i.e., the inter-prediction unit 261 or the intra-prediction unit 262), thereby generating a reconstructed signal (or reconstructed block).

The filtering unit 240 applies filtering to the reconstructed signal (or reconstructed block) and outputs the filtered signal to a playback device or transmits the filtered signal to the decoded picture buffer 250. The filtered signal transmitted to the decoded picture buffer 250 may be used as a reference picture in the inter-prediction unit 261.

In this specification, the embodiments described in the filtering unit 160, inter-prediction unit 181 and intra-prediction unit 182 of the encoder 100 may be identically applied to the filtering unit 240, inter-prediction unit 261 and intra-prediction unit 262 of the decoder, respectively.

In general, a block-based image compression method is used in the compression technique (e.g., HEVC) of a still image or a video. The block-based image compression method is a method of processing an image by splitting it into specific block units, and may decrease memory use and a computational load.

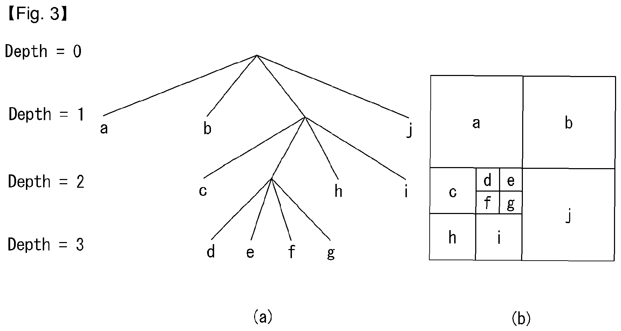

FIG. 3 is a diagram for describing a split structure of a coding unit which may be applied to the present invention.

An encoder splits a single image (or picture) into coding tree units (CTUs) of a quadrangle form, and sequentially encodes the CTUs one by one according to raster scan order.

In HEVC, a size of CTU may be determined as one of 64×64, 32×32, and 16×16. The encoder may select and use the size of a CTU based on resolution of an input video signal or the characteristics of input video signal. The CTU includes a coding tree block (CTB) for a luma component and the CTB for two chroma components that correspond to it.

One CTU may be split in a quad-tree structure. That is, one CTU may be split into four units each having a square form and having a half horizontal size and a half vertical size, thereby being capable of generating coding units (CUs). Such splitting of the quad-tree structure may be recursively performed. That is, the CUs are hierarchically split from one CTU in the quad-tree structure.

A CU means a basic unit for the processing process of an input video signal, for example, coding in which intra/inter prediction is performed. A CU includes a coding block (CB) for a luma component and a CB for two chroma components corresponding to the luma component. In HEVC, a CU size may be determined as one of 64×64, 32×32, 16×16, and 8×8.

Referring to FIG. 3, the root node of a quad-tree is related to a CTU. The quad-tree is split until a leaf node is reached. The leaf node corresponds to a CU.

This is described in more detail. The CTU corresponds to the root node and has the smallest depth (i.e., depth=0) value. A CTU may not be split depending on the characteristics of an input video signal. In this case, the CTU corresponds to a CU.

A CTU may be split in a quad-tree form. As a result, lower nodes, that is, a depth 1 (depth=1), are generated. Furthermore, a node (i.e., leaf node) that belongs to the lower nodes having the depth of 1 and that is no longer split corresponds to a CU. For example, in FIG. 3(b), a CU(a), a CU(b) and a CU(j) corresponding to nodes a, b and j have been once split from the CTU, and have a depth of 1.

At least one of the nodes having the depth of 1 may be split in a quad-tree form. As a result, lower nodes having a depth 1 (i.e., depth=2) are generated. Furthermore, a node (i.e., leaf node) that belongs to the lower nodes having the depth of 2 and that is no longer split corresponds to a CU. For example, in FIG. 3(b), a CU(c), a CU(h) and a CU(i) corresponding to nodes c, h and i have been twice split from the CTU, and have a depth of 2.

Furthermore, at least one of the nodes having the depth of 2 may be split in a quad-tree form again. As a result, lower nodes having a depth 3 (i.e., depth=3) are generated. Furthermore, a node (i.e., leaf node) that belongs to the lower nodes having the depth of 3 and that is no longer split corresponds to a CU. For example, in FIG. 3(b), a CU(d), a CU(e), a CU(f) and a CU(g) corresponding to nodes d, e, f and g have been three times split from the CTU, and have a depth of 3.

In the encoder, a maximum size or minimum size of a CU may be determined based on the characteristics of a video image (e.g., resolution) or by considering the encoding rate. Furthermore, information about the maximum or minimum size or information capable of deriving the information may be included in a bit stream. A CU having a maximum size is referred to as the largest coding unit (LCU), and a CU having a minimum size is referred to as the smallest coding unit (SCU).

In addition, a CU having a tree structure may be hierarchically split with predetermined maximum depth information (or maximum level information). Furthermore, each split CU may have depth information. Since the depth information represents a split count and/or degree of a CU, it may include information about the size of a CU.

Since the LCU is split in a Quad-tree shape, the size of SCU may be obtained by using a size of LCU and the maximum depth information. Or, inversely, the size of LCU may be obtained by using a size of SCU and the maximum depth information of the tree.

For a single CU, the information (e.g., a split CU flag (split_cu_flag)) that represents whether the corresponding CU is split may be forwarded to the decoder. This split information is included in all CUs except the SCU. For example, when the value of the flag that represents whether to split is '1', the corresponding CU is further split into four CUs, and when the value of the flag that represents whether to split is '0', the corresponding CU is not split any more, and the processing process for the corresponding CU may be performed.

As described above, a CU is a basic unit of the coding in which the intra-prediction or the inter-prediction is performed. The HEVC splits the CU in a prediction unit (PU) for coding an input video signal more effectively.

A PU is a basic unit for generating a prediction block, and even in a single CU, the prediction block may be generated in different way by a unit of PU. However, the intra-prediction and the inter-prediction are not used together for the PUs that belong to a single CU, and the PUs that belong to a single CU are coded by the same prediction method (i.e., the intra-prediction or the inter-prediction).

A PU is not split in the Quad-tree structure, but is split once in a single CU in a predetermined shape. This will be described by reference to the drawing below.

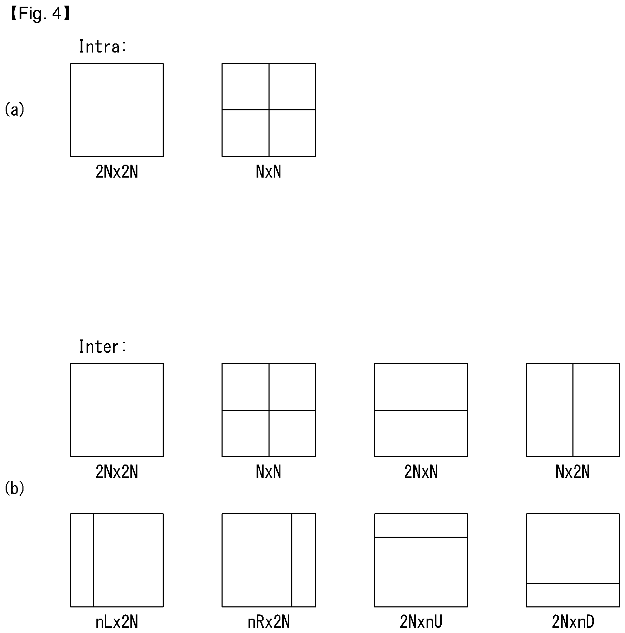

FIG. 4 is a diagram for describing a prediction unit that may be applied to the present invention.

A PU is differently split depending on whether the intra-prediction mode is used or the inter-prediction mode is used as the coding mode of the CU to which the PU belongs.

FIG. 4(a) illustrates a PU if the intra-prediction mode is used, and FIG. 4(b) illustrates a PU if the inter-prediction mode is used.

Referring to FIG. 4(a), assuming that the size of a single CU is 2N×2N (N = 4, 8, 16 and 32), the single CU may be split into two types (i.e., 2N×2N or NxN).

In this case, if a single CU is split into the PU of 2N×2N shape, it means that only one PU is present in a single CU.

Meanwhile, if a single CU is split into the PU of N×N shape, a single CU is split into four PUs, and different prediction blocks are generated for each PU unit. However, such PU splitting may be performed only if the size of CB for the luma component of CU is the minimum size (i.e., the case that a CU is an SCU).

Referring to FIG. 4(b), assuming that the size of a single CU is 2N×2N (N = 4, 8, 16 and 32), a single CU may be split into eight PU types (i.e., 2N×2N, N×N, 2N×N, N×2N, nL×2N, nR×2N, 2N×nU and 2N×nD)

As in the intra-prediction, the PU split of N×N shape may be performed only if the size of CB for the luma component of CU is the minimum size (i.e., the case that a CU is an SCU).

The inter-prediction supports the PU split in the shape of 2N×N that is split in a horizontal direction and in the shape of N×2N that is split in a vertical direction.

In addition, the inter-prediction supports the PU split in the shape of nL×2N, nR×2N, 2N×nU and 2N×nD, which is an asymmetric motion split (AMP). In this case, 'n' means 1/4 value of 2N. However, the AMP may not be used if the CU to which the PU is belonged is the CU of minimum size.

In order to encode the input video signal in a single CTU efficiently, the optimal split structure of the coding unit (CU), the prediction unit (PU) and the transform unit (TU) may be determined based on a minimum rate-distortion value through the processing process as follows. For example, as for the optimal CU split process in a 64×64 CTU, the rate-distortion cost may be calculated through the split process from a CU of 64×64 size to a CU of 8×8 size. The detailed process is as follows.
1) The optimal split structure of a PU and TU that generates the minimum rate distortion value is determined by performing inter/intra-prediction, transformation/quantization, dequantization/inverse transformation and entropy encoding on the CU of 64×64 size.
2) The optimal split structure of a PU and TU is determined to split the 64×64 CU into four CUs of 32×32 size and to generate the minimum rate distortion value for each 32×32 CU.
3) The optimal split structure of a PU and TU is determined to further split the 32×32 CU into four CUs of 16×16 size and to generate the minimum rate distortion value for each 16×16 CU.
4) The optimal split structure of a PU and TU is determined to further split the 16×16 CU into four CUs of 8×8 size and to generate the minimum rate distortion value for each 8×8 CU.
5) The optimal split structure of a CU in the 16×16 block is determined by comparing the rate-distortion value of the 16×16 CU obtained in the process 3) with the addition of the rate-distortion value of the four 8×8 CUs obtained in the process 4). This process is also performed for remaining three 16×16 CUs in the same manner.
6) The optimal split structure of CU in the 32×32 block is determined by comparing the rate-distortion value of the 32×32 CU obtained in the process 2) with the addition of the rate-distortion value of the four 16×16 CUs that is obtained in the process 5). This process is also performed for remaining three 32×32 CUs in the same manner.
7) Finally, the optimal split structure of CU in the 64×64 block is determined by comparing the rate-distortion value of the 64×64 CU obtained in the process 1) with the addition of the rate-distortion value of the four 32×32 CUs obtained in the process 6).

In the intra-prediction mode, a prediction mode is selected as a PU unit, and prediction and reconstruction are performed on the selected prediction mode in an actual TU unit.

A TU means a basic unit in which actual prediction and reconstruction are performed. A TU includes a transform block (TB) for a luma component and a TB for two chroma components corresponding to the luma component.

In the example of FIG. 3, as in an example in which one CTU is split in the quad-tree structure to generate a CU, a TU is hierarchically split from one CU to be coded in the quad-tree structure.

TUs split from a CU may be split into smaller and lower TUs because a TU is split in the quad-tree structure. In HEVC, the size of a TU may be determined to be as one of 32×32, 16×16, 8×8 and 4×4.

Referring back to FIG. 3, the root node of a quad-tree is assumed to be related to a CU. The quad-tree is split until a leaf node is reached, and the leaf node corresponds to a TU.

This is described in more detail. A CU corresponds to a root node and has the smallest depth (i.e., depth=0) value. A CU may not be split depending on the characteristics of an input image. In this case, the CU corresponds to a TU.

A CU may be split in a quad-tree form. As a result, lower nodes having a depth 1 (depth=1) are generated. Furthermore, a node (i.e., leaf node) that belongs to the lower nodes having the depth of 1 and that is no longer split corresponds to a TU. For example, in FIG. 3(b), a TU(a), a TU(b) and a TU(j) corresponding to the nodes a, b and j are once split from a CU and have a depth of 1.

At least one of the nodes having the depth of 1 may be split in a quad-tree form again. As a result, lower nodes having a depth 2 (i.e., depth=2) are generated. Furthermore, a node (i.e., leaf node) that belongs to the lower nodes having the depth of 2 and that is no longer split corresponds to a TU. For example, in FIG. 3(b), a TU(c), a TU(h) and a TU(i) corresponding to the node c, h and I have been split twice from the CU and have the depth of 2.

Furthermore, at least one of the nodes having the depth of 2 may be split in a quad-tree form again. As a result, lower nodes having a depth 3 (i.e., depth=3) are generated. Furthermore, a node (i.e., leaf node) that belongs to the lower nodes having the depth of 3 and that is no longer split corresponds to a CU. For example, in FIG. 3(b), a TU(d), a TU(e), a TU(f) and a TU(g) corresponding to the nodes d, e, f and g have been three times split from the CU and have the depth of 3.

A TU having a tree structure may be hierarchically split with predetermined maximum depth information (or maximum level information). Furthermore, each spit TU may have depth information. The depth information may include information about the size of the TU because it indicates the split number and/or degree of the TU.

Information (e.g., a split TU flag "split_transform_flag") indicating whether a corresponding TU has been split with respect to one TU may be transferred to the decoder. The split information is included in all of TUs other than a TU of a minimum size. For example, if the value of the flag indicating whether a TU has been split is "1", the corresponding TU is split into four TUs. If the value of the flag indicating whether a TU has been split is "0", the corresponding TU is no longer split.

### Prediction

In order to reconfigure a current processing unit on which decoding is performed, a decoded part of a current picture or other pictures including the current processing unit may be used.

A picture (slice) using only a current picture for reconstruction, that is, on which only intra prediction is performed, may be called an intra picture or I picture (slice). A picture (slice) using a maximum of one motion vector and reference index in order to predict each unit may be called a predictive picture or P picture (slice). A picture (slice) using a maximum of two motion vectors and reference indices may be called a bi-predictive picture or B picture (slice).

Intra prediction means a prediction method of deriving a current processing block from a data element (e.g., a sample value) of the same decoded picture (or slice). That is, intra prediction means a method of predicting a pixel value of a current processing block with reference to reconstructed areas within a current picture.

Inter prediction means a prediction method of deriving a current processing block based on a data element (e.g., a sample value or a motion vector) of a picture other than a current picture. That is, inter prediction means a method of predicting a pixel value of a current processing block with reference to reconstructed areas within another reconstructed picture other than a current picture.

Hereinafter, intra prediction is described more specifically.

### Intra prediction (or prediction within frame)

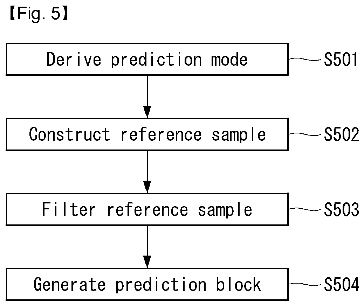

FIG. 5 is an embodiment to which the present invention is applied and is a diagram illustrating an intra prediction method.

Referring to FIG. 5, the decoder derives an intra prediction mode of a current processing block (S501).

Intra prediction may have a prediction direction for the position of a reference sample used for prediction depending on a prediction mode. An intra prediction mode having a prediction direction is referred to as an intra-angular prediction mode (Intra_Angular prediction mode). In contrast, an intra prediction mode not having a prediction direction includes an intra planar (INTRA_PLANAR) prediction mode and an intra DC (INTRA_DC) prediction mode.

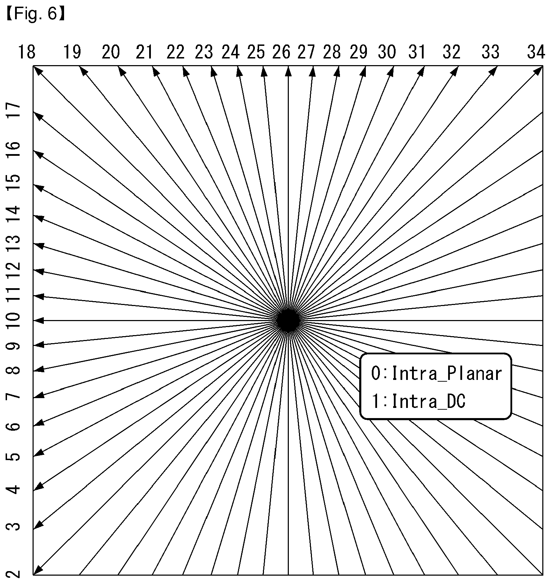

Table 1 illustrates intra-prediction modes and associated names, and FIG. 6 illustrates a prediction direction according to an intra-prediction mode.

**[Table 1]**

| INTRA-PREDICTION MODE | ASSOCIATED NAMES |
|---|---|
| 0 | INTRA-PLANAR (INTRA_PLANAR) |
| 1 | INTRA-DC (INTRA_DC) |
| 2 ..., 34 | INTRA-ANGULAR 2 ..., INTRA-ANGULAR 34 (INTRA_ANGULAR2 ..., INTRA_ANGULAR34) |

In intra-prediction, prediction is performed on a current processing block based on a derived prediction mode. A reference sample used for prediction and a detailed prediction method are different depending on a prediction mode. If a current block is an intra-prediction mode, the decoder derives the prediction mode of a current block in order to perform prediction.

The decoder checks whether neighboring samples of the current processing block can be used for prediction and constructs reference samples to be used for the prediction (S502).

In intra-prediction, neighboring samples of the current processing block mean a sample neighboring the left boundary of current processing block of an nS×nS size, a total of 2×nS samples neighboring a bottom left of the current processing block, a sample neighboring the top boundary of the current processing block, a total of 2×nS samples neighboring the top right of the current processing block, and one sample neighboring the top left of the current processing block.

However, some of the neighboring samples of the current processing block have not yet been coded or may not be available. In this case, the decoder may construct reference samples to be used for prediction by substituting unavailable samples with available samples.

The decoder may perform filtering on the reference samples based on the intra-prediction mode (S503).

Whether or not to perform the filtering of the reference samples may be determined based on the size of the current processing block. Furthermore, the filtering method of the reference samples may be determined based on a filtering flag transferred by the encoder..

The decoder generates a prediction block for the current processing block based on the intra prediction mode and the reference samples (S504). That is, the decoder generates a prediction block for the current processing block (i.e., generates a prediction sample within the current processing block) based on the intra prediction mode derived in the intra prediction mode derivation step (S501) and the reference samples obtained in the reference sample configuration step (S502) and the reference sample filtering step (S503).

If a current processing block has been encoded in the INTRA_DC mode, in order to minimize the discontinuity of the boundary between processing blocks, a left boundary sample (i.e., a sample within a prediction block neighboring a left boundary) and top boundary sample (i.e., a sample within a prediction block neighboring a top boundary) of the prediction block may be filtered at step S504.

Furthermore, at step S504, with respect to the vertical mode and horizontal mode of intra-angular prediction modes, as in the INTRA_DC mode, filtering may be applied to a left boundary sample or a top boundary sample.

More specifically, if a current processing block has been encoded in the vertical mode or horizontal mode, a value of a prediction sample may be derived based on a value of a reference sample positioned in the prediction direction. In this case, a boundary sample not positioned in the prediction direction among a left boundary sample or top boundary sample of a prediction block may neighbor a reference sample not used for prediction. That is, the distance from a reference sample not used for prediction may be much closer than the distance from a reference sample used for prediction.

Accordingly, the decoder may adaptively apply filtering to left boundary samples or top boundary samples depending on whether an intra prediction direction is a vertical direction or a horizontal direction. That is, the decoder may apply filtering to left boundary samples if the intra prediction direction is a vertical direction, and may apply filtering to top boundary samples if the intra prediction direction is a horizontal direction.

In HEVC, in order to represent (or signaling) 35 types of prediction modes with smaller bits, the statistical property of a prediction within an image (or intra prediction) is used.

Generally, since an encoding block has similar image property to a neighboring block, it is highly probable that a prediction within an image also has the same as or similar prediction within an image. By considering such a property, an encoder/decoder determines a prediction mode of a peripheral block (or neighboring block) and a prediction mode most commonly generated to a Most Probable Mode (MPM).

In the case that a prediction mode of a current PU is determined to be the MPM, bits used for representing the prediction mode may be saved (represented within 2 bits), but in the case that a prediction mode is determined to be a different prediction mode, not the MPM mode, since the prediction mode is encoded with a mode among 32 modes except three MPM modes, a prediction mode within an image may be used by using 5 bits, not 6 bits.

Recently, it has been discussed a method of performing a prediction within an image by using total 67 prediction modes within an image by extending 33 directional prediction modes of HEVC to 65 modes and adding the existing non-directional mode. As such, increase of a prediction direction within an image enables more accurate prediction and reduces distortion, but there is a disadvantage that an overhead bit for signaling the increased prediction modes is required.

Accordingly, the present invention proposes a method for grouping prediction modes efficiently except a Most Probable Mode (MPM) in order to represent the increased prediction modes within an image with smaller bits.

Hereinafter, in the present invention, the proposed method is described by assuming that 67 prediction modes within an image are used for a prediction within an image, and 6 prediction modes within an image is used as MPM candidate. However, the present invention is not limited thereto. That is, in the present invention, the number of prediction modes within an image used for a prediction within an image is not necessarily limited to 67, and the number of prediction modes used for the MPM candidate is not necessarily limited to 6.

### Embodiment 1

In an embodiment of the present invention, an encoder/decoder may encode/decode 67 prediction modes within an image by using a Most Probable Mode (MPM) and a non-MPM mode.

Here, the non-MPM mode indicates a prediction mode (or prediction mode group) which is not an MPM among the entire prediction modes. As described above, by assuming 67 prediction modes within an image and 6 MPM candidates, the non-MPM mode may include 61 prediction modes.

For an efficient signaling of 61 prediction modes which are not included in an MPM candidate list, the encoder/decoder may divide the non-MPM mode into a first mode group and a second mode group. By allocating smaller bits to the prediction modes of the first mode group than the prediction modes of the second mode group, bits for signaling a prediction mode within an image may be reduced and compression efficiency may be improved. Here, the first mode group may be referred to as a selected mode, a selected mode group, and the like. The second mode group may be referred to as a non selected mode, a non selected mode group, and the like.

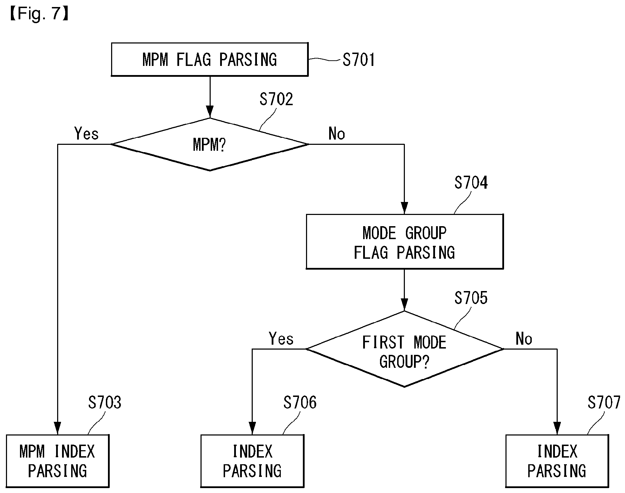

FIG. 7 is a flowchart for describing a method for decoding a prediction mode within an image as an embodiment to which the present invention is applied.

An encoding/decoding method of a prediction mode within an image described in the present invention may be applied to both of an encoder and a decoder, and will be described based on a decoder for the convenience of description.

A decoder parses an MPM flag (step, S701), and determines whether a prediction mode of a current block is encoded by using an MPM based on the MPM flag (step, S702). Here, the MPM flag indicates whether the prediction mode of the current block is included in an MPM candidate list.

As a result of the determination in step S702, in the case that the current block is encoded by using the MPM, the decoder parses an MPM index (step, S703). Here, the MPM index indicates a prediction mode within an image applied to a prediction within an image of the current block in the MPM candidate list.

As a result of the determination in step S702, in the case that the current block is not encoded by using the MPM, the decoder parses a mode group flag (step, S704), and determines whether the prediction mode of the current block is encoded by using the first mode group based on the mode group flag (step, S705). Here, the mode group flag indicates whether the prediction mode of the current block is included in the first mode group or included in the second mode group. The second mode group may include the remaining prediction modes except the prediction modes of the first mode group among 61 prediction modes which are not included in the MPM candidate list.

As a result of the determination in step S705, in the case that the current block is encoded by using the first mode group, the decoder parses a first index indicating a prediction mode within an image of the current block within the first mode group list (step, S706).

As a result of the determination in step S705, in the case that the current block is not encoded by using the first mode group, that is, encoded by using the second mode group, the decoder parses a second index indicating a prediction mode within an image of the current block within the second mode group list (step, S706).

In an embodiment of the present invention, the encoder/decoder may allocate a bit smaller than the second mode group to the first mode group. Particularly, the encoder/decoder may perform binarization of prediction modes of the first mode group with fixed 4 bits, and perform binarization of prediction modes of the second mode group with 5 bits or 6 bits. This will be described by referring to the drawing below.

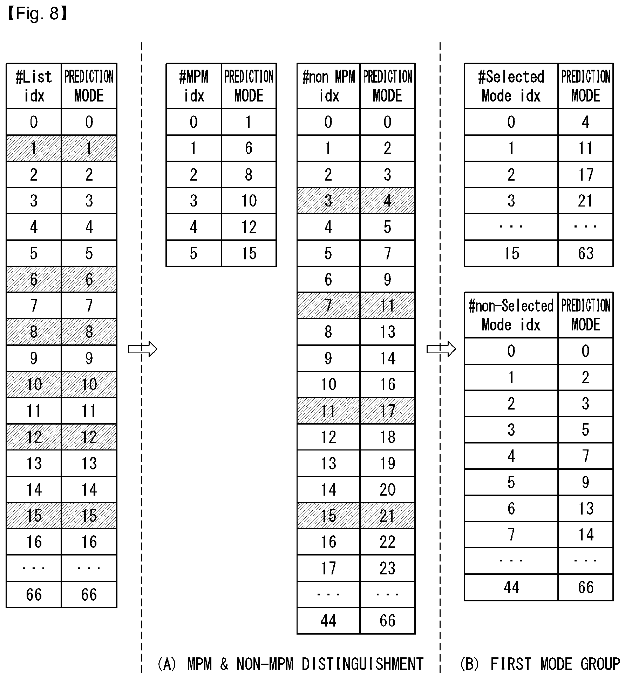

FIG. 8 is a diagram illustrating a method for configuring a prediction mode group as an embodiment to which the present invention is applied.

Referring to FIG. 8, it is assumed the case that the first mode group is configured by using 16 prediction modes in an encoder/decoder. However, the present invention is not limited thereto, but the number of the first mode groups may have various values.

Particularly, the encoder/decoder may arrange the 61 remaining prediction modes which are not included in the MPM candidate list in an ascending order, and configure the first mode group by using 16 prediction modes that correspond to an order of multiple of 4 in the arranged list. And, the encoder/decoder may allocate 4 bits to each of the indexes indicating a prediction mode of the first mode group.

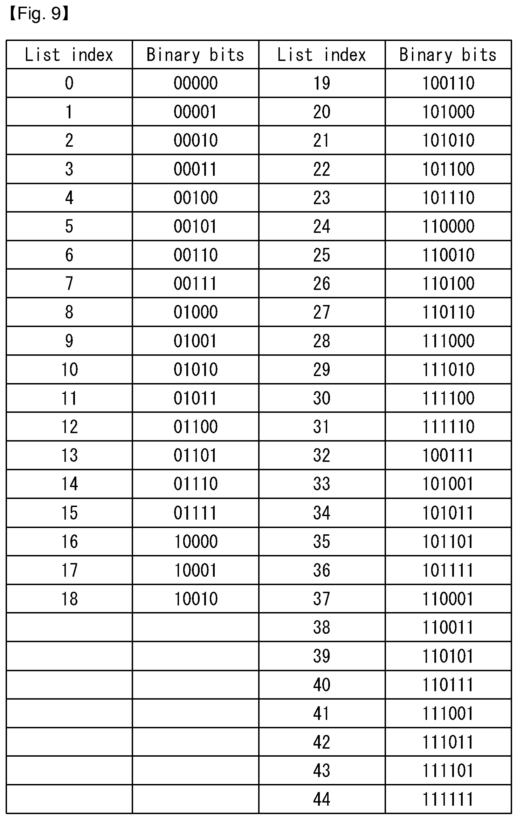

FIG. 9 is a diagram illustrating a method for binarization of a prediction mode group as an embodiment to which the present invention is applied.

The encoder/decoder may configure the second mode group 45 prediction modes except the prediction modes of the first mode group among the 61 remaining prediction modes which are not included in the MPM candidate list. 5 bits or 6 bits may be allocated to the indexes that indicate the 45 prediction modes.

Referring to FIG. 9, the encoder/decoder may perform binarization of 19 prediction modes among the 45 prediction modes by using 5 bits, and perform binarization of the remaining 26 prediction modes by using 6 bits.

### Embodiment 2

In an embodiment of the present invention, an encoder/decoder may group prediction modes except an MPM by considering a selection probability of a prediction mode.

As described above, for an efficient signaling of the remaining prediction modes which are not included in the MPM candidate list, the encoder/decoder may configure (or generate) the first mode group to which smaller bit is allocated among the non-MPM modes. By allocating smaller bits to the prediction modes of the first mode group than the prediction modes of the second mode group, bits for signaling a prediction mode within an image may be saved.

However, in the non-MPM mode described in embodiment 1 above, the remaining prediction modes not included in the MPM candidate list are simply arranged in an ascending order, and the prediction modes of a multiple of 4 is configured as the first mode group in the list. According to the configuration method of the non-MPM mode as described above, an arbitrary prediction mode is selected as the first mode group, and accordingly, a selection probability of a prediction mode in the first mode group may be lowered, and flag bits for distinguishing the first mode group and the second mode group are wasted, and accordingly, a problem may occur that compression efficiency is degraded.

Accordingly, in an embodiment of the present invention, in order to solve the problem described above, it is proposed a method for configuring a prediction mode group efficiently by considering a selection probability of a prediction mode.

Generally, since a coding block has a picture property which is similar to a neighboring block, it is highly probable hat a prediction mode within an image also has the same or similar prediction mode within an image. By considering such a property, an encoder/decoder may add a prediction mode of a neighboring block to the first mode group.

In addition, the prediction modes of which selection probability is statistically high are known. For example, it is known that a planar mode, a DC mode, a vertical mode, a horizontal mode or a diagonal mode is selected with statistically high probability in comparison with the remaining other modes. The encoder/decoder may add the modes of which selection probability is statistically high (or modes which are frequently selected statistically) to the first mode group.

By configuring the first mode group to which relatively smaller bits are allocated by using a prediction mode of which selection probability is statistically high with a prediction mode of a neighboring block, a selection probability of a prediction mode within the first mode group may be increased.

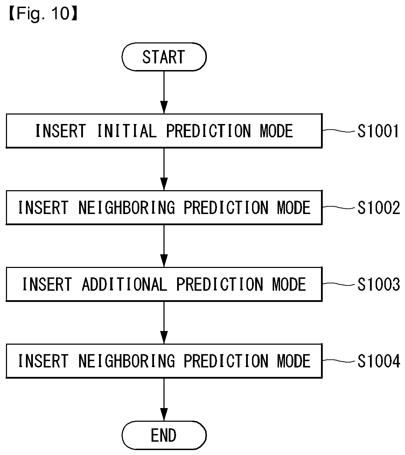

FIG. 10 is a flowchart illustrating a method for configuring a prediction mode group as an embodiment to which the present invention is applied.

Referring to FIG. 10, it is assumed the case that the first mode group is configured by using 16 prediction modes in an encoder/decoder. However, the present invention is not limited thereto, but the number of the first mode groups may have various values. In addition, the number of the first mode groups may be predetermined, or transmitted to the decoder with a unit of a sequence a picture, a slice or an encoding block from the encoder.

First, the encoder/decoder inserts an initial prediction mode to a first mode group list (step, S1001). The initial prediction mode may include a prediction mode of which selection probability is statistically high with a prediction mode of a neighboring block. In step S1001, the prediction modes which are not inserted (or added) to the list by being pushed back on the priority in the MPM candidate list configuration process may be inserted to the first mode group list. The detailed method is described below.

The encoder/decoder inserts a prediction mode which is the closest to the prediction direction of an angular prediction mode among the prediction modes included in the first mode group list (step, S1002). The detailed method is described below.

The encoder/decoder inserts an additional prediction mode to the first mode group list (step, S1003). The additional prediction mode may include a prediction mode of which selection probability is statistically high. The detailed method is described below.

The encoder/decoder inserts a prediction mode which is the closest to the prediction direction of an angular prediction mode among the prediction modes included in the first mode group list until 16 prediction modes are configured in the first mode group list (step, S1004). The detailed method is described below.

In order to configure the first mode group list, a step in addition to the steps described above may be added, or a part of the steps may be omitted. For example, the encoder/decoder may insert both of the initial prediction mode and the additional prediction mode in step S1001, and insert a prediction mode neighboring the prediction direction of the angular prediction mode among the prediction modes included in the first mode group list until 16 prediction modes are configured. In this case, steps S1001 and S1003 may be omitted.

Hereinafter, with reference to the drawing below, detailed procedure of step S1001 shown in FIG. 10 is described.

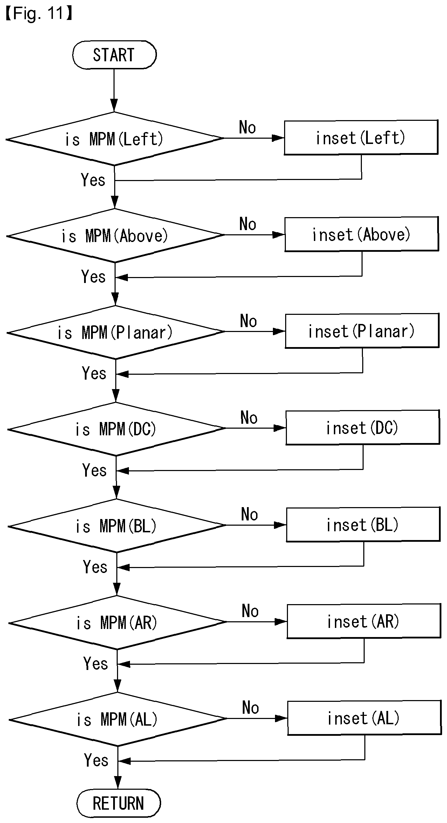

FIG. 11 is a diagram illustrating a method of inserting a prediction mode in a prediction mode group list as an embodiment to which the present invention is applied.

An encoder/decoder may insert an initial prediction mode to a first mode group list. The initial prediction mode may include a prediction mode of which selection probability is statistically high with a prediction mode of a neighboring block. In this case, in the case that the prediction mode intended to be insert (or added) is already inserted in the MPM candidate list, the encoder/decoder may not insert the corresponding prediction mode.

In other words, the encoder/decoder may determine whether the initial prediction mode is inserted to the MPM candidate list, and in the case that the initial prediction mode is not inserted to the MPM candidate list as a result of the determination, the encoder/decoder may insert the corresponding mode to the first mode group list.

For example, the initial prediction mode may include the following prediction modes.

1) Prediction mode of left neighboring block, 2) Prediction mode of above neighboring block, 3) Planer mode, 4) DC mode, 5) Prediction mode of bottom-left neighboring block, 6) Prediction mode of above-right neighboring block and 7) Prediction mode of above-left neighboring block

In FIG. 11, a method of inserting the additional prediction mode is shown as a flowchart, but this is just an embodiment, and the present invention is not limited thereto. The insertion order between prediction modes which are frequently selected statistically may be interchanged, and one or more prediction mode insertion steps may be omitted. In addition, prediction modes which are frequently selected statistically (e.g., Vertical mode and Horizontal mode) may be further added in addition to the prediction mode proposed above. For example, an insertion order of the prediction modes are in the order: 1) Planer mode, 2) Prediction mode of bottom-left neighboring block, 3) Prediction mode of above-right neighboring block, 4) Prediction mode of above-left neighboring block, 5) DC mode, 6) Vertical mode and 7) Horizontal mode. In addition, the insertion order of the initial prediction modes may be determined in the same way of the configuration order of the Most Probable Mode (MPM).

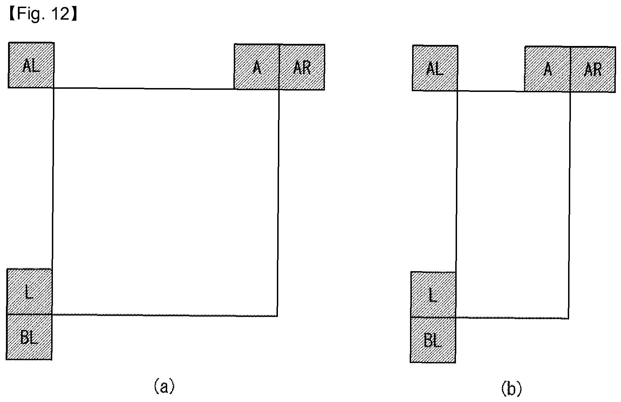

FIG. 12 is a diagram for describing a method of referring a prediction mode of a neighboring block as an embodiment to which the present invention is applied.

Referring to FIG. 12, an encoder/decoder may configure an initial prediction mode by using a prediction mode of a neighboring block which is neighboring a current block.

In the case that the current block is a square block, a block which is neighboring a Left (L), an above (A), an Above-Left (AL), a Bottom-Left (BL) and an Above-Right (AR) may be determined as shown in FIG. 12(a).

In the case that the current block is a non square block, a block which is neighboring a Left (L), an above (A), an Above-Left (AL), a Bottom-Left (BL) and an Above-Right (AR) may be determined as shown in FIG. 12(b).

Hereinafter, with reference to the drawing below, detailed procedure of step S1002 shown in FIG. 10 is described.

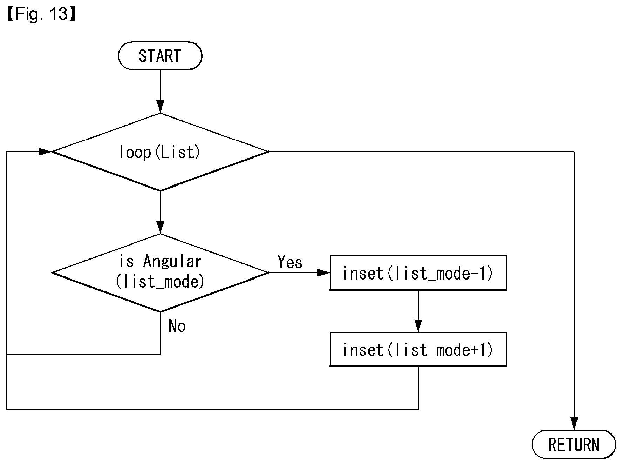

FIG. 13 is a diagram illustrating a method of inserting a prediction mode in a prediction mode group list as an embodiment to which the present invention is applied.
1. An encoder/decoder determines whether a prediction mode included in the first mode group list corresponds to an angular prediction mode.
2. As a result of the determination, the prediction mode corresponds to the angular prediction mode, the encoder/decoder adds a prediction mode corresponding to a value adding or subtracting 1 to/from a mode value of the corresponding prediction mode to the first mode group list.
3. The encoder/decoder repeats steps 1 and 2 with respect to all prediction modes included in the first mode group list.

Hereinafter, with reference to the drawing below, detailed procedure of step S1003 shown in FIG. 10 is described.

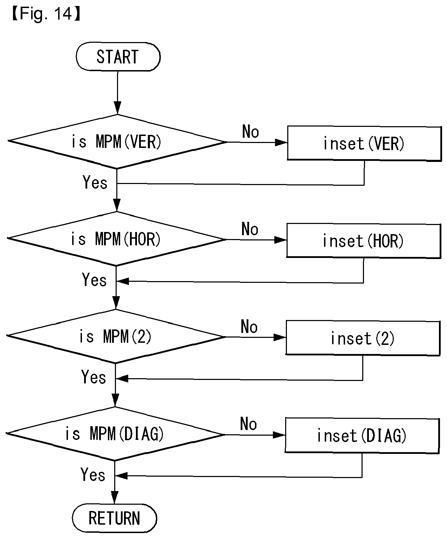

FIG. 14 is a diagram illustrating a method of inserting a prediction mode in a prediction mode group list as an embodiment to which the present invention is applied.

An encoder/decoder may insert an additional prediction mode to the first mode group list. The additional prediction mode may include a prediction mode of which a selection probability is statistically high. In this case, in the case that the prediction mode intended to insert (or add) is already inserted in the MPM candidate list or in the case that the prediction mode is already inserted in the first mode group list, the encoder/decoder may not insert the corresponding prediction mode.

In other words, the encoder/decoder may determine whether the additional prediction mode is inserted in the MPM candidate list, and in the case that the additional prediction mode is not inserted in the MPM candidate list as a result of the determination, the encoder/decoder may insert the corresponding prediction mode in the first mode group list.

For example, the additional prediction mode may include the following prediction modes:
1) Vertical mode, 2) Horizontal mode, 3) Prediction mode 2 and 4) Diagonal mode

In FIG. 14, a method of inserting the additional prediction mode is shown as a flowchart, but this is just an embodiment, and the present invention is not limited thereto. The insertion order between prediction modes which are frequently selected statistically may be interchanged, and one or more prediction mode insertion steps may be omitted. In the case that the mode which is frequently selected statistically is not included in the initial prediction mode shown in FIG. 11 above, the additional prediction modes shown in FIG. 14 may be included.

Here, prediction mode 2 indicates the prediction mode of which prediction direction is the same as prediction mode 2 of HEVC described in FIG. 6.

Hereinafter, with reference to the drawing below, detailed procedure of step S1004 shown in FIG. 10 is described.

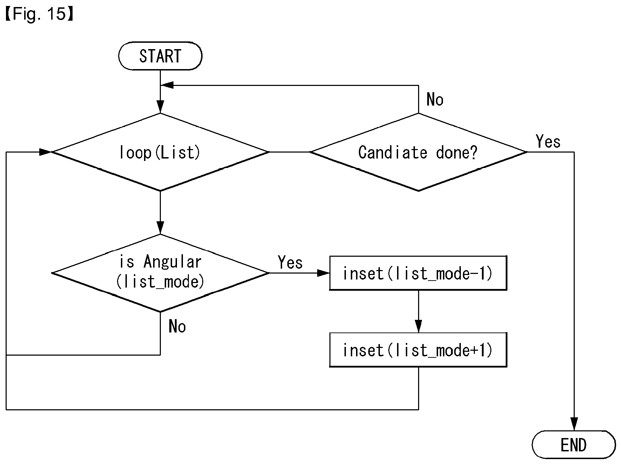

FIG. 15 is a diagram illustrating a method of inserting a prediction mode in a prediction mode group list as an embodiment to which the present invention is applied.
1. An encoder/decoder determines whether a prediction mode included in the first mode group list corresponds to an angular prediction mode.
2. As a result of the determination, the prediction mode corresponds to the angular prediction mode, the encoder/decoder adds a prediction mode corresponding to a value adding or subtracting 1 to/from a mode value of the corresponding prediction mode to the first mode group list.
3. The encoder/decoder repeats steps 1 and 2 with respect to all prediction modes included in the first mode group list.
4. The encoder/decoder determines whether the first mode group list which is inserted up to now satisfies the total number.
5. In the case that the first mode group list which is inserted up to now does not satisfy the total number, the encoder/decoder repeats steps 1, 2 and 3.
6. In the case that the first mode group list which is inserted up to now satisfies the total number, the encoder/decoder terminates a generation of the first mode group list.

That is, when it is assumed that the total number of the first group list is 16, the encoder/decoder may add the prediction modes neighboring the prediction direction of the angular prediction mode included in the first mode group list until the first mode group list is configured with 16 prediction modes finally.

### Embodiment 3

In an embodiment of the present invention, an encoder/decoder may group prediction modes except an MPM by considering a selection probability of a prediction mode. Particularly, the encoder/decoder may configure a prediction mode group by using a prediction mode of which directionality is different from a prediction mode of a neighboring block.

In embodiment 2, it is described a method of configuring the first mode group by using a prediction mode of which selection probability is statistically high with a prediction mode of a neighboring block. In this embodiment, in addition to the prediction mode of a neighboring block and the prediction mode of which selection probability is statistically high, a prediction mode of which directionality is different from the prediction mode of a neighboring block may be used.

In the case that a current block is not encoded by using an MPM, a prediction mode of the current block is selected among the modes which are not selected as an MPM candidate. At this time, when a selection pattern is analyzed, the probability is rather high that an exceptional mode of which relationship (or correlation) with a prediction mode of a neighboring mode is significantly low is selected. Accordingly, by considering such an exceptional mode in the non-MPM mode, a selection probability of a prediction mode is increased and encoding efficiency may be improved.

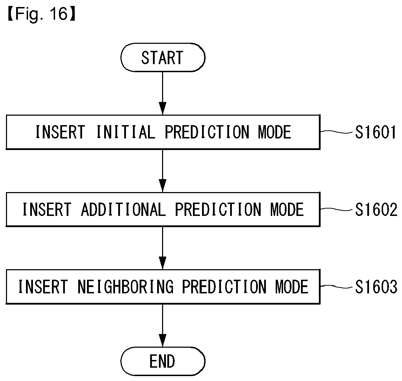

FIG. 16 is a flowchart illustrating a method of configuring a prediction mode group as an embodiment to which the present invention is applied.

First, the encoder/decoder inserts an initial prediction mode to a first mode group list (step, S1601). The initial prediction mode may include a prediction mode of which selection probability is statistically high with a prediction mode of a neighboring block. In step S1601, the prediction modes which are not inserted (or added) to the list by being pushed back on the priority in the MPM candidate list configuration process may be inserted to the first mode group list. The detailed method is described below.

The encoder/decoder inserts an additional prediction mode to the first mode group list (step, S1602). The additional prediction mode may include a prediction mode of which correlation with a prediction direction of a prediction mode of a neighboring block is low (i.e., directionality is different). The detailed method is described below.

The encoder/decoder inserts a prediction mode which is the closest to the prediction direction of an angular prediction mode among the prediction modes included in the first mode group list until prediction modes are configured as much as the total number of the first mode group list (step, S1603). This step may be performed with the same method as that of described in FIG. 15 above.

In order to configure the first mode group list, a step in addition to the steps described above may be added, or a part of the steps may be omitted.

Hereinafter, with reference to the drawing below, detailed procedure of step S1601 shown in FIG. 16 is described.

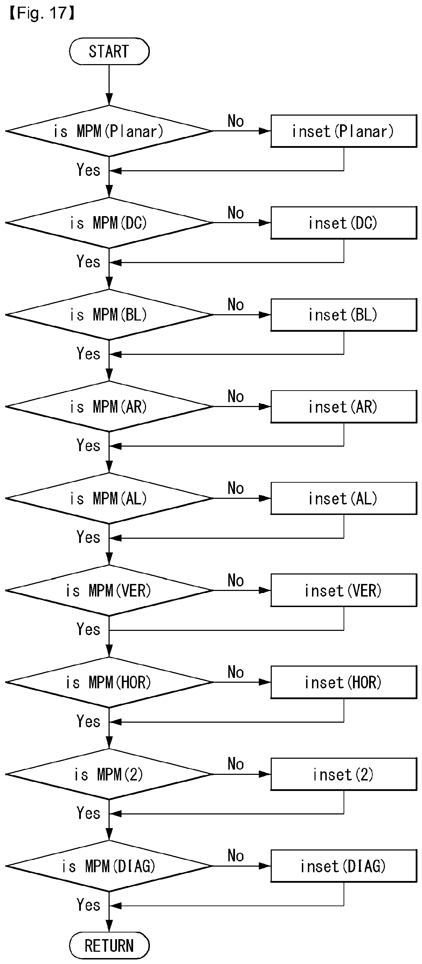

FIG. 17 is a diagram illustrating a method of inserting a prediction mode in a prediction mode group list as an embodiment to which the present invention is applied.

An encoder/decoder may insert an initial prediction mode to a first mode group list. The initial prediction mode may include a prediction mode of which selection probability is statistically high with a prediction mode of a neighboring block. In this case, in the case that the prediction mode intended to be insert (or added) is already inserted in the MPM candidate list, the encoder/decoder may not insert the corresponding prediction mode.

In other words, the encoder/decoder may determine whether the initial prediction mode is inserted to the MPM candidate list, and in the case that the initial prediction mode is not inserted to the MPM candidate list as a result of the determination, the encoder/decoder may insert the corresponding mode to the first mode group list.

For example, the initial prediction mode may include the following prediction modes.

1) Planer mode, 2) DC mode, 3) Prediction mode of bottom-left neighboring block, 4) Prediction mode of above-right neighboring block, 5) Prediction mode of above-left neighboring block, 6) Vertical mode, 7) Horizontal mode, 8) Prediction mode 2 and 9) Diagonal mode

The initial prediction mode exemplified above is just an embodiment, and the present invention is not limited thereto. That is, the insertion order between prediction modes which are frequently selected statistically may be interchanged, and one or more prediction mode insertion steps may be omitted.

Hereinafter, with reference to the drawing below, detailed procedure of step S1602 shown in FIG. 16 is described.

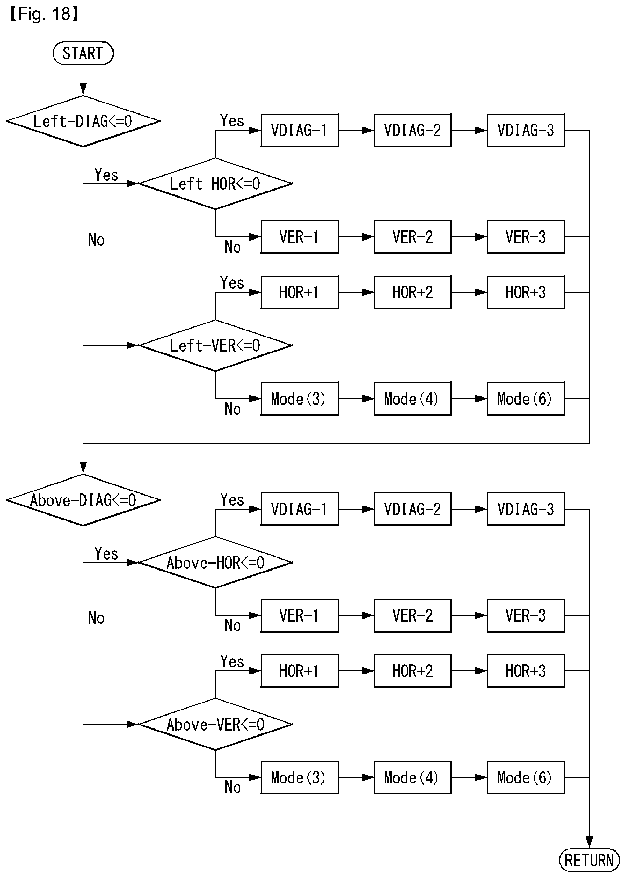

FIG. 18 is a diagram illustrating a method of inserting a prediction mode in a prediction mode group list as an embodiment to which the present invention is applied.

An encoder/decoder may insert an additional prediction mode to the first mode group list. The additional prediction mode may include a prediction mode of which correlation with a prediction direction of a prediction mode of a neighboring block is low (i.e., directionality is different). For example, the additional prediction mode may be included as the following steps.
1. An encoder/decoder determines whether a value subtracted by a mode value of a diagonal mode from a mode value of a prediction mode of a left neighboring block (hereinafter, may be referred to as 'left prediction mode') is equal to or smaller than 0.
2. In the case that the value subtracted by a mode value of a diagonal mode from a mode value of a left prediction mode is equal to or smaller than 0, the encoder/decoder determines whether a value subtracted by a mode value of a horizontal mode from a mode value of a left prediction mode is equal to or smaller than 0.
3. In the case that the value subtracted by a mode value of a horizontal mode from a mode value of a left prediction mode is equal to or smaller than 0, the encoder/decoder adds a prediction mode subtracted by 1, 2 and 3 from a mode value of a vertical diagonal mode to the first mode group list. Here, the vertical diagonal mode indicates the prediction mode of which prediction direction is the same as prediction mode 34 of HEVC described in FIG. 6 above.
4. In the case that the value subtracted by a mode value of a horizontal mode from a mode value of a left prediction mode is greater than 0, the encoder/decoder adds a prediction mode subtracted by 1, 2 and 3 from a mode value of a vertical mode to the first mode group list.
5. In the case that the value subtracted by a mode value of a diagonal mode from a mode value of a left prediction mode is greater than 0, the encoder/decoder determines whether a value subtracted by a mode value of a vertical mode from a mode value of a left prediction mode is equal to or smaller than 0.
6. In the case that the value subtracted by a mode value of a vertical mode from a mode value of a left prediction mode is equal to or smaller than 0, the encoder/decoder adds a prediction mode added by 1, 2 and 3 from a mode value of a horizontal mode to the first mode group list.
7. In the case that the value subtracted by a mode value of a vertical mode from a mode value of a left prediction mode is greater than 0, the encoder/decoder adds prediction modes 3, 4 and 5 to the first mode group list.
8. By using a prediction mode of a block neighboring an above side of the current block (hereinafter, may be referred to as 'above prediction mode') instead of the left prediction mode, the encoder/decoder performs steps 1 to 7 described above. Except the fact that the above prediction mode is used instead of the left prediction mode, the method may be performed in the same method described in steps 1 to 7 above.

That is, the encoder/decoder may configure the first mode group by using a prediction mode which is symmetrical to a prediction direction of a prediction mode of a neighboring block (e.g., left prediction mode or above prediction mode) based on the prediction direction of a diagonal mode.

In order to configure the first mode group list, a step in addition to the steps described above may be added, or a part of the steps may be omitted. In addition, the additional prediction mode is not limited to the prediction modes described so far in the present invention. For example, the encoder/decoder may add a prediction mode symmetrical based on the prediction direction of a diagonal mode and the prediction modes corresponding to a value by adding or subtracting 1 to/from a mode value of the corresponding prediction mode to the first mode group list.

Meanwhile, with reference to the drawing below, a prediction mode which may be added according to the method described in FIG. 18 above is described with an example.

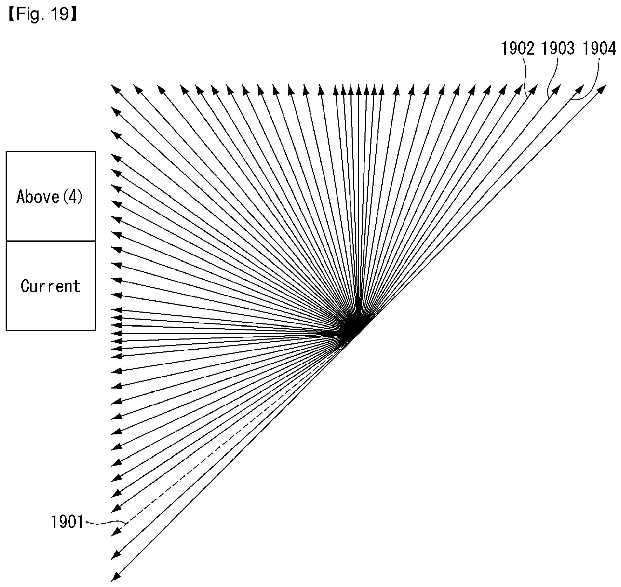

FIG. 19 is a diagram illustrating a method of determining a prediction mode added to a prediction mode group based on a prediction mode of a neighboring block as an embodiment to which the present invention is applied.

Referring to FIG. 19, in the case that 67 prediction modes are used for a prediction within an image, 65 angular prediction modes are shown. In addition, a mode value of each prediction mode may be determined in an order which is the same as that of a mode value of HEVC described in FIG. 6 above. In other words, starting from prediction mode 2 of the same prediction direction as prediction mode 2 of HEVC described in FIG. 6, up to prediction mode 66 may be determined in order.

An encoder/decoder may distinguish 65 angular prediction modes into four categories. At this time, the category may be distinguished by being grouped in a prediction direction. A first category may be distinguished into prediction modes 2 to 18, a second category may be distinguished into prediction modes 19 to 34, a third category may be distinguished into prediction modes 35 to 50 and a fourth category may be distinguished into prediction modes 51 to 66.

The encoder/decoder may add prediction modes of a category which is symmetrical to the category to which a prediction mode of a neighboring block is belonged based on a diagonal direction to the first mode group.

For example, in the case that a prediction mode of an above neighboring block is prediction mode 4 1901, since an above prediction mode belongs to the first category, the encoder/decoder may add the prediction mode which belongs to the fourth category in the first mode group. For example, the encoder/decoder may add prediction modes 1902, 1903 and 1904 corresponding to a value subtracting 1, 2, and 3 from prediction mode 66 to the first mode group.

As such, a prediction mode of which directionality is different from a prediction mode of a neighboring block is added, prediction modes which is hard to be added by the method of adding two prediction modes (i.e., -1 and +1 prediction modes) which are the closest to the prediction mode in the list, but of which possibility (or probability) of being selected is high finally, may be added in the prediction mode list.

### Embodiment 4

In an embodiment of the present invention, an encoder/decoder may arrange orders of prediction modes included in a mode group list based on a selection probability of a prediction mode.

As described in embodiment 1 above, the second mode group may include 45 prediction modes, and may be represented (or binary-coded) with 5 bits or 6 bits. However, if 5 bits are allocated to 19 prediction modes and 6 bits are allocated to the remaining 26 prediction modes in the order of which mode value is smaller simply, more bits may be allocated although it is a prediction mode of which selection probability is relatively high, and accordingly, compression efficiency may be degraded.

Accordingly, in order to solve the problem above, the present embodiment proposes a method of rearranging (or reconfiguring) a list based on a selection probability in the process of encoding the second mode group.

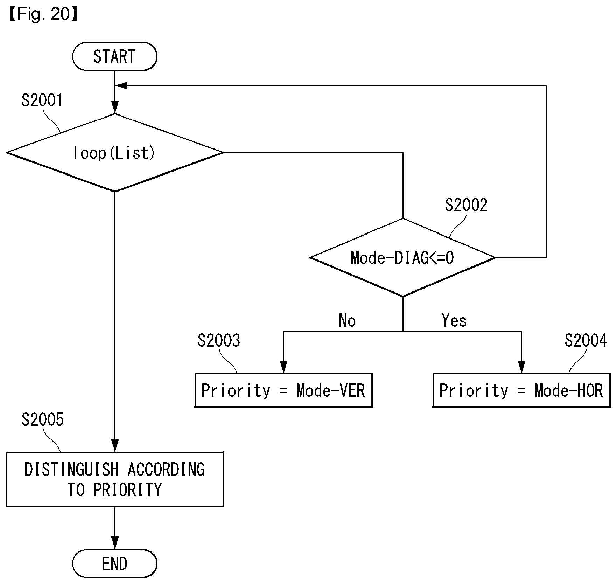

FIG. 20 is a flowchart illustrating a method of arranging a prediction mode of a prediction mode group list as an embodiment to which the present invention is applied.

An encoder/decoder determines whether a value subtracting a mode value of a diagonal mode from a mode value of each prediction mode is equal to or smaller than 0 while turning loop for the prediction modes of the second mode group list (steps, S2001 and S2002).

With respect to each of the prediction modes of which values subtracting a mode value of a diagonal mode is greater than 0, the encoder/decoder allocates (or configures) a priority corresponding to a value subtracting a vertical mode from the corresponding mode value (step, S2003).

With respect to each of the prediction modes of which values subtracting a mode value of a diagonal mode is equal to or smaller than 0, the encoder/decoder allocates (or configures) a priority corresponding to a value subtracting a horizontal mode from the corresponding mode value (step, S2004).

The encoder/decoder arranges the prediction modes of the second mode group based on the priority which is allocated in step S2003 and step S2004 (step, S2005).

That is, 45 prediction modes included in the second mode group may have higher priority as the prediction modes closer to a horizontal mode or a vertical mode or a prediction direction of a vertical mode. Later, the encoder/decoder may arrange the list in an ascending order based on the allocated priority, and perform a binarization.

The embodiments described above may be independently performed, or one or more embodiments may be performed in a combined manner. For example, after a prediction mode group is configured by the method described in embodiment 2, a prediction mode may be added by the method described in embodiment 3. In addition, the encoder/decoder may configure the first mode group according to the method described in embodiment 1, 2 or 3, and then, rearrange the prediction mode order in the second mode group according to the method described in embodiment 4.

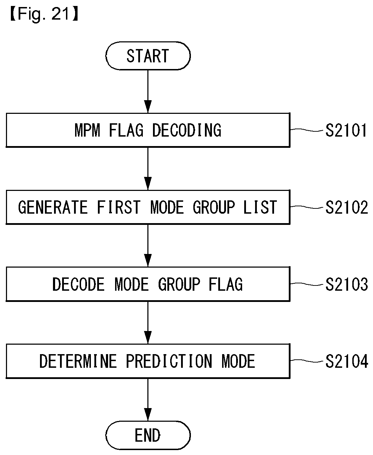

FIG. 21 is a diagram for describing an intra prediction mode according to an embodiment of the present invention.

A decoder decodes a Most Probable Mode (MPM) flag indicating whether a current block is encoded by using Most Probable Mode (MPM) (step, S2101).

In the case that the current block is not encoded by using the MPM, the decoder generates the first mode group list by using remaining prediction modes except an MPM candidate (step, S2102).

As described above, the decoder may generate the first mode group to which smaller bits are allocated among non-MPM modes. By allocating smaller bits to the prediction modes of the first mode group than the prediction modes of the second mode group, a bit for signaling a prediction mode within an image may be saved.

As described above, the decoder may add a prediction mode of a neighboring block to the first mode group. In this case, step S2102 may include a step of adding the prediction mode of a block neighboring the current block among the remaining prediction modes except an MPM candidate.

In addition, as described in FIG. 12 above, the block neighboring the current block may include at least one of a block neighboring left, above, above-left, bottom-left or above-right side of the current block.

Furthermore, as described above, the decoder may add prediction modes of which selection probability is statistically high to the first mode group. In this case, the step of generating the first mode group list may include adding a first prediction mode among the remaining prediction modes except the MPM candidate to the first mode group list, and the first prediction mode may include at least one of a planar mode, a DC mode, a vertical mode, a horizontal mode or a diagonal mode.

In addition, as described above, the decoder may add a prediction mode which is adjacent to an angular prediction mode of the first mode group. In this case, the step of generating the first mode group list may include adding a prediction mode corresponding to a value adding or subtracting 1 to/from a mode value of an angular prediction mode among the prediction modes included in the first mode group list to the first mode group list.

Furthermore, the step of generating the first mode group list may include adding a prediction mode corresponding to a value by adding or subtracting 1 to/from a mode value of an angular prediction mode among the prediction modes included in the first mode group list to the first mode group list repeatedly until a total number of the first mode group list is filled up. Here, the total number of the first mode group list may be a predetermined number or transmitted in a unit of a sequence, a picture, a slice or a encoding block from an encoder.

In addition, as described above, the decoder may configure a prediction mode group by using a prediction mode of which directionality is different from a prediction mode of a neighboring block. In this case, the step of generating the first mode group list may include adding a prediction mode symmetrical to a prediction mode of a block neighboring the current block based on a prediction direction of a diagonal mode.

The decoder decodes a mode group flag indicating whether the prediction mode of the current block is included in the first mode group list (step, S2103).

The decoder determines the prediction mode of the current block by using an index indicating a specific prediction mode in the first mode group list, when the prediction mode of the current block is included in the first mode group list (step, S2104).

In the case that the prediction mode of the current block is not included in the first mode group list, the decoder may generate the second mode group list. In addition, the decoder may determine a prediction mode of the current block by using an index indicating a specific prediction mode in the second mode group list. At this time, the second mode group list may include prediction modes except the prediction modes of the first mode group list among the remaining prediction modes except the MPM candidate.

As described above, the decoder may arrange (or rearrange) the second mode group list based on a selection probability of a prediction mode. For example, the decoder may allocate higher priority to a prediction mode closer to a prediction direction of a vertical mode or a horizontal mode among the prediction modes except the prediction modes of the first mode group list, and arrange the second mode group list based on the allocated priority.

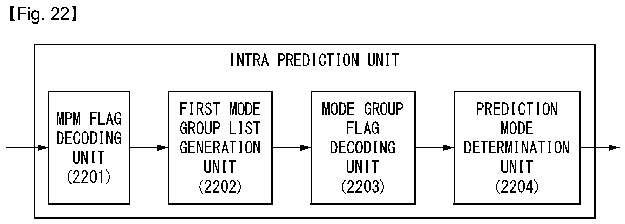

FIG. 22 is a diagram illustrating an intra prediction mode in more detail according to an embodiment of the present invention.

For the convenience of description, in FIG. 22, an intra prediction unit 182 (refer to FIG. 1) or 262 (refer to FIG. 2) is shown as a single block, but the intra prediction unit 182 or 262 may be implemented as an element which is included in an encoder and/or a decoder.

Referring to FIG. 22, the intra prediction unit 182 or 262 implements the function, the process and/or the method proposed in FIG. 5 to FIG. 21 above. Particularly, the intra prediction unit 182 or 262 may include an MPM flag decoding unit 2201, a first mode group list generation unit 2202, a mode group flag decoding unit 2203 and a prediction mode determination unit 2204.

The MPM flag decoding unit 2201 decodes a Most Probable Mode (MPM) flag indicating whether a current block is encoded by using Most Probable Mode (MPM).

In the case that the current block is not encoded by using the MPM, the first mode group list generation unit 2202 generates the first mode group list by using remaining prediction modes except an MPM candidate.

As described above, the first mode group list generation unit 2202 may generate the first mode group to which smaller bits are allocated among non-MPM modes. By allocating smaller bits to the prediction modes of the first mode group than the prediction modes of the second mode group, a bit for signaling a prediction mode within an image may be saved.

As described above, the first mode group list generation unit 2202 may add a prediction mode of a neighboring block to the first mode group. In this case, the first mode group list generation unit 2202 may include a step of adding the prediction mode of a block neighboring the current block among the remaining prediction modes except an MPM candidate.

In addition, as described in FIG. 12 above, the block neighboring the current block may include at least one of a block neighboring left, above, above-left, bottom-left or above-right side of the current block.

Furthermore, as described above, the first mode group list generation unit 2202 may add prediction modes of which selection probability is statistically high to the first mode group. In this case, the first mode group list generation unit 2202 may add a first prediction mode among the remaining prediction modes except the MPM candidate to the first mode group list. And, the first prediction mode may include at least one of a planar mode, a DC mode, a vertical mode, a horizontal mode or a diagonal mode.

In addition, as described above, the first mode group list generation unit 2202 may add a prediction mode which is adjacent to an angular prediction mode of the first mode group. In this case, the first mode group list generation unit 2202 may add a prediction mode corresponding to a value adding or subtracting 1 to/from a mode value of an angular prediction mode among the prediction modes included in the first mode group list to the first mode group list.

Furthermore, the first mode group list generation unit 2202 may add a prediction mode corresponding to a value by adding or subtracting 1 to/from a mode value of an angular prediction mode among the prediction modes included in the first mode group list to the first mode group list repeatedly until a total number of the first mode group list is filled up. Here, the total number of the first mode group list may be a predetermined number or transmitted in a unit of a sequence, a picture, a slice or a encoding block from an encoder.

In addition, as described above, the first mode group list generation unit 2202 may configure a prediction mode group by using a prediction mode of which directionality is different from a prediction mode of a neighboring block. In this case, the first mode group list generation unit 2202 may add a prediction mode symmetrical to a prediction mode of a block neighboring the current block based on a prediction direction of a diagonal mode.

The mode group flag decoding unit 2203 decodes a mode group flag indicating whether the prediction mode of the current block is included in the first mode group list.

The prediction mode determination unit 2204 determines the prediction mode of the current block by using an index indicating a specific prediction mode in the first mode group list, when the prediction mode of the current block is included in the first mode group list.

In the case that the prediction mode of the current block is not included in the first mode group list, the decoder may generate the second mode group list. In this case, the intra prediction unit may further include a second mode group list generation unit.

In addition, the prediction mode determination unit 2204 may determine a prediction mode of the current block by using an index indicating a specific prediction mode in the second mode group list. At this time, the second mode group list may include prediction modes except the prediction modes of the first mode group list among the remaining prediction modes except the MPM candidate.

As described above, the second mode group list generation unit may arrange (or rearrange) the second mode group list based on a selection probability of a prediction mode. For example, the second mode group list generation unit may allocate higher priority to a prediction mode closer to a prediction direction of a vertical mode or a horizontal mode among the prediction modes except the prediction modes of the first mode group list, and arrange the second mode group list based on the allocated priority.

In the aforementioned embodiments, the elements and characteristics of the present invention have been combined in specific forms. Each of the elements or characteristics may be considered to be optional unless otherwise described explicitly. Each of the elements or characteristics may be implemented in such a way as to be not combined with other elements or characteristics. Furthermore, some of the elements and/or the characteristics may be combined to form an embodiment of the present invention. The order of the operations described in connection with the embodiments of the present invention may be changed. Some of the elements or characteristics of an embodiment may be included in another embodiment or may be replaced with corresponding elements or characteristics of another embodiment. It is evident that an embodiment may be configured by combining claims not having an explicit citation relation in the claims or may be included as a new claim by amendments after filing an application.

The embodiment of the present invention may be implemented by various means, for example, hardware, firmware, software or a combination of them. In the case of implementations by hardware, an embodiment of the present invention may be implemented using one or more application-specific integrated circuits (ASICs), digital signal processors (DSPs), digital signal processing devices (DSPDs), programmable logic devices (PLDs), field programmable gate arrays (FPGAs), processors, controllers, microcontrollers and/or microprocessors.

In the case of an implementation by firmware or software, an embodiment of the present invention may be implemented in the form of a module, procedure, or function for performing the aforementioned functions or operations. Software code may be stored in memory and driven by a processor. The memory may be located inside or outside the processor, and may exchange data with the processor through a variety of known means.

It is evident to those skilled in the art that the present invention may be materialized in other specific forms without departing from the essential characteristics of the present invention. Accordingly, the detailed description should not be construed as being limitative from all aspects, but should be construed as being illustrative. The scope of the present invention should be determined by reasonable analysis of the attached claims, and all changes within the equivalent range of the present invention are included in the scope of the present invention.

### [Industrial Applicability]

The aforementioned preferred embodiments of the present invention have been disclosed for illustrative purposes, and those skilled in the art may improve, change, substitute, or add various other embodiments without departing from the technological spirit and scope of the present invention disclosed in the attached claims.

## Claims

1. A method for processing an image based on an intra prediction mode, comprising:
decoding a Most Probable Mode (MPM) flag indicating whether a current block is encoded by using a MPM;
generating a first mode group list by using remaining prediction modes except an MPM candidate, when the current block is not encoded by using the MPM;
decoding a mode group flag indicating whether the prediction mode of the current block is included in the first mode group list; and
determining the prediction mode of the current block by using an index indicating a specific prediction mode in the first mode group list, when the prediction mode of the current block is included in the first mode group list.

2. The method of claim 1, wherein the step of generating the first mode group list comprising:
adding a prediction mode of a block neighboring the current block among the remaining prediction modes except the MPM candidate to the first mode group list.

3. The method of claim 2, wherein the block neighboring the current block includes at least one of a block neighboring left, above, above-left, bottom-left or above-right side of the current block.

4. The method of claim 1, wherein the step of generating the first mode group list comprising:
adding a first prediction mode among the remaining prediction modes except the MPM candidate to the first mode group list,
wherein the first prediction mode includes at least one of a planar mode, a DC mode, a vertical mode, a horizontal mode or a diagonal mode.

5. The method of claim 1, wherein the step of generating the first mode group list comprising:
adding a prediction mode corresponding to a value adding or subtracting 1 to/from a mode value of an angular prediction mode among the prediction modes included in the first mode group list to the first mode group list.

6. The method of claim 1, wherein the step of generating the first mode group list comprising:
adding a prediction mode corresponding to a value by adding or subtracting 1 to/from a mode value of an angular prediction mode among the prediction modes included in the first mode group list to the first mode group list repeatedly until a total number of the first mode group list is filled up.

7. The method of claim 6, wherein the total number of the first mode group list is a predetermined number or transmitted in a unit of a sequence, a picture, a slice or an encoding block from an encoder.

8. The method of claim 1, wherein the step of generating the first mode group list comprising:
adding a prediction mode symmetrical to a prediction mode of a block neighboring the current block based on a prediction direction of a diagonal mode.

9. The method of claim 1, when the prediction mode of the current block is not included in the first mode group list, further comprising:
generating a second mode group list; and
determining a prediction mode of the current block by using an index indicating a specific prediction mode in the second mode group list.

10. The method of claim 9, wherein the second mode group list includes prediction modes except the prediction modes of the first mode group list among the remaining prediction modes except the MPM candidate.

11. The method of claim 10, wherein the step of generating the first mode group list comprising:
allocating higher priority to a prediction mode closer to a prediction direction of a vertical mode or a horizontal mode among the prediction modes except the prediction modes of the first mode group list; and
arranging the second mode group list based on the allocated priority.

12. An apparatus for processing an image based on an intra-prediction mode, comprising:
an MPM flag decoding unit for decoding a Most Probable Mode (MPM) flag indicating whether a current block is encoded by using a MPM;
a first mode group list generation unit for generating a first mode group list by using remaining prediction modes except an MPM candidate, when the current block is not encoded by using the MPM;
a mode group flag decoding unit for decoding a mode group flag indicating whether the prediction mode of the current block is included in the first mode group list; and
a prediction mode determination unit for determining a prediction mode of the current block by using an index indicating a specific prediction mode in the first mode group list, when the prediction mode of the current block is included in the first mode group list.
